# EUROPÄISCHE PATENTSCHRIFT

(11) **EP 3 301 028 B1**
(45) Veröffentlichungstag und Bekanntmachung des Hinweises auf die Patenterteilung: **04.09.2019**
(21) Anmeldenummer: 16190982.5
(22) Anmeldetag: 28.09.2016
(51) Int. Cl.: B64F 1/305

(54) **KUPPELMODUL ALS SCHNITTSTELLE ZWISCHEN EINER FLUGGASTBRÜCKE ODER FLUGGASTTREPPE UND DEM RUMPF EINES FLUGZEUGS**
COUPLING MODULE AS INTERFACE BETWEEN A PASSENGER BRIDGE OR PASSENGER STAIRCASE AND THE FUSELAGE OF A PLANE
MODULE DE COUPLAGE COMME INTERFACE ENTRE UNE PASSERELLE AÉROPORTUAIRE OU UN ESCALIER POUR PASSAGER ET LE FUSELAGE D'UN AÉRONEF

(43) Veröffentlichungstag der Anmeldung: 04.04.2018
(73) Patentinhaber: Hübner GmbH & Co. KG, 34123 Kassel (DE)
(72) Erfinder: Schuster, Heinz, 34123 Kassel (DE); Klöckl, Frank, 34587 Felsberg (DE)
(74) Vertreter: Patentanwälte Walther Hinz Bayer PartGmbB

(56) Entgegenhaltungen:
- US-A1- 2003 120 358
- US-A1- 2003 136 898
- US-A1- 2006 070 193

## Beschreibung

Die Erfindung betrifft ein Kuppelmodul als Schnittstelle zwischen einer Fluggastbrücke oder Fluggasttreppe und dem Rumpf eines Flugzeugs, wobei das Kuppelmodul einen Boden und eine Ausgangsöffnung aufweist, wobei der Boden ein Bodenkopfteil umfasst, wobei das Bodenkopfteil durch mindestens eine Sensoreinrichtung gesteuert unter Bildung eines stirnseitigen Abstands des Bodenkopfteils zum Flugzeugrumpf horizontal inz Richtung der Ausgangsöffnung des Kuppelmoduls verschieblich ist.

Ein Kuppelmodul als Schnittstelle zwischen einer Fluggastbrücke oder einer Fluggasttreppe und dem Rumpf eines Flugzeugs ist aus dem Stand der Technik hinreichend bekannt. Derartige Kuppelmodule sind beispielsweise an der Fluggastbrücke im Bereich des vorderen Endes der Fluggastbrücke angeordnet, und bilden den unmittelbaren Übergang zwischen der Fluggastbrücke einerseits und dem Flugzeug andererseits. Ein solches Kuppelmodul als Schnittstelle umfasst im Einzelnen ein Faltenvordach, wobei das Faltenvordach in der stirnseitigen Ansicht U-förmig ausgebildet ist, und endseitig einen Bumper aufweist, mit dem das Faltenvordach durch eine entsprechende Schwenkvorrichtung in Richtung auf den Flugzeugrumpf im Bereich des Zugangs des Flugzeugs zu verschwenkbar ist. Bevor das Vordach auf den Flugzeugrumpf zu verschwenkt wird, wird die Fluggastbrücke mit dem Kuppelmodul relativ nah an das Flugzeug herangefahren, im Idealfall bis der Bodenbereich des Kuppelmoduls mit dem frontseitig angebrachten Bumper an dem Flugzeugrumpf anliegt.

Aus der US 2003/0120358 A1 ist in diesem Zusammenhang eine mehrteilige Fluggastbrücke bekannt, die dem Flugzeugrumpf zugewandt eine Kabine zur Anlage am Flugzeugrumpf aufweist.

Flugzeugrümpfe sind insbesondere im vorderen Bereich des Flugzeugs sehr stark konturiert. Das heißt, dass insbesondere im vorderen Bereich des Flugzeugrumpfes ein vollständiges Anliegen des Bodens des Kuppelmoduls am Flugzeug nicht zu gewährleisten war. Insofern ist auch bereits aus der EP 2 463 199 B1 der Boden eines Kuppelmoduls bekannt, der zumindest in Teilbereichen segmentierbar ist. Dies vor dem Hintergrund, dass gerade bei einem Kuppelmodul, das im Frontbereich eines Flugzeugrumpfes an das Flugzeug im Bereich der Türöffnung angelegt werden soll, zumindest im stark konturierten Bereich des Flugzeugrumpfes die Möglichkeit des spaltfreien Anliegens an den Flugzeugrumpf eröffnet wird.
Die neuesten Flugzeuge allerdings haben eine Außenhaut, die ein Anliegen von Teilen der Fluggastbrücke oder Fluggasttreppe an der Außenhaut des Rumpfes des Flugzeuges nicht mehr erlauben. Dies deshalb, weil die Flugzeughülle aus Kunststoff gefertigt ist, und insofern selbst ein leichtes Anliegen von Bauteilen, beispielsweise einer Fluggastbrücke, zu einer Beschädigung des Rumpfes führen kann.

Das Bodenkopfteil ist durch mindestens eine Sensoreinrichtung gesteuert unter Bildung eines minimalen stirnseitigen Abstands des Bodenkopfteils zum Flugzeugrumpf horizontal in Richtung der Ausgangsöffnung des Kuppelmoduls verschieblich. Das heißt, dass man davon ausgeht, dass eine Berührung des Flugzeugrumpfes zumindest durch den Boden des Kuppelmodules durch einen solchen minimalen stirnseitigen Abstand des Bodens zum Rumpf vermieden wird, indem nämlich durch eine Sensoreinrichtung die Unterschreitung eines minimalen Abstandes verhindert wird. Sensoreinrichtungen sind aus dem Stand der Technik bekannt, insbesondere auch solche, die für die Positionierung einer Fluggastbrücke an der Tür eines Flugzeugs dienen. Insofern ist aus der WO 01/344671A1 bekannt, für die Positionierung einer beweglichen Fluggastbrücke an die Tür eines Flugzeugs einen Sensor mit einer Lichtquelle, welche elektromagnetische Strahlung in einer Abstrahlrichtung emittiert, und mit einem Detektor, welcher von einer Oberfläche des Flugzeugs reflektierte elektromagnetische Strahlung detektiert, zu verwenden. Dabei wird eine Laufzeit der elektromagnetischen Strahlung von der Lichtquelle zu dem Detektor ermittelt, anhand der auf den Abstand des Sensors zum Flugzeug in der Abstrahlrichtung geschlossen wird. Hierbei wird, um verschiedene Punkte auf einer Oberfläche des Flugzeugs mit der elektromagnetischen Strahlung abzutasten, und so ein Linienprofil der Oberfläche ermitteln zu können, die Abstrahlrichtung mittels eines verschwenkbaren Spiegels variiert. Das so ermittelte Linienprofil wird zusammen mit in einem Computer hinterlegten Informationen zur Position der Tür an dem Flugzeug zur korrekten Positionierung der Fluggastbrücke an das Flugzeug im Bereich Tür verwendet. Dies allerdings immer mit dem Ziel, das Kuppelmodul der Fluggastbrücke im Bereich des Vordaches und im Bereich des Bodens an den Rumpf des Flugzeugs anzulegen.

Nun soll das Bodenkopfteil nicht mehr an dem Flugzeugrumpf anliegen, sondern mit einem Abstand, insbesondere einen minimalen Abstand, sich zu dem Rumpf des Flugzeugs befinden. Der Abstand beträgt hierbei zwischen 10 und 50 mm, was bedeutet, dass für Personen, die das Flugzeug besteigen, nicht die Gefahr besteht, etwa in den Spalt zwischen Boden und Flugzeugrumpf zu gelangen. Das heißt, die Spaltbreite ist so gewählt, dass ein genügender Sicherheitsabstand zwischen der Stirnseite des Bodenkopfteils und der Außenhaut des Flugzeugs besteht und andererseits nicht die Gefahr besteht, dass Passagiere in dem Spalt mit den Füßen hängenbleiben oder gar durchtreten.

Gegenstand der Erfindung ist ein Kuppelmodul gemäß Anspruch 1, wobei der Boden einen feststehenden Bodenabschnitt aufweist, wobei an dem feststehenden Bodenabschnitt das mindestens eine Bodenkopfteil verschieblich angeordnet ist. Hieraus wird deutlich, dass der Boden zwei Teile aufweist, nämlich einen feststehenden Bodenabschnitt, der sich unmittelbar an das hintere Ende des Kuppelmoduls anschließt, und ein relativ zum feststehenden Bodenabschnitt bewegliches Bodenkopfteil, das in Richtung auf den Rumpf des Flugzeugs, also zur Ausgangsöffnung des Kuppelmoduls zu verschieblich ist, wobei zur Verschiebung eine Antriebseinrichtung vorgesehen sein kann.

Vorteilhafte Merkmale und Ausgestaltungen der Erfindung ergeben sich aus den Unteransprüchen.

Ein weiteres Merkmal der Erfindung zeichnet sich dadurch aus, dass das Bodenkopfteil mehrere Bodensegmente umfasst, die zumindest partiell relativ zueinander horizontal verschieblich sind. Das heißt, dass die einzelnen Bodensegmente quer zur Längsachse des Flugzeugs auf den Rumpf des Flugzeugs zu verschieblich sind oder anders ausgedrückt, dass die Bodensegmente parallel zur Seitenwand des Kuppelmoduls verschieblich sind. Durch die Segmentierung des Bodenkopfteils über die gesamte Breite des Bodenkopfteils in einzelne Segmente wird erreicht, dass der Boden des Kuppelmoduls über die gesamte Breite des Kuppelmoduls einen im Wesentlichen gleichen, insbesondere minimalen Abstand zum Flugzeugrumpf im Bereich der Zugangstür des Flugzeugs einnehmen kann. Das im Gegensatz zum Stand der Technik gemäß der EP 2 463 199 B1, bei der, wie bereits ausgeführt, nur ein Teil des Bodenkopfteils segmentiert ausgebildet ist, kann bei der Erfindung ein konstant minimaler Abstand zum Flugzeugrumpf gewährleistet werden, selbst wenn das Kuppelmodul etwas winklig zum Rumpf des Flugzeugs steht.

Es wurde bereits darauf hingewiesen, dass das Bodenkopfteil durch eine Antriebseinrichtung in Richtung auf den Flugzeugrumpf zu verschieblich ist. Umfasst das Bodenkopfteil nunmehr, wie bereits ausgeführt, eine Mehrzahl von Bodensegmenten, die relativ zueinander in Richtung auf den Flugzeugrumpf zu verschieblich sind, also zur Ausgangsöffnung des Kuppelmoduls zu verschieblich sind, verfügt zumindest ein Teil der Bodensegmente, insbesondere aber ein jedes Bodensegment über eine eigene Antriebseinrichtung.

Nach einem weiteren Merkmal der Erfindung ist vorgesehen, dass zumindest ein Teil der Bodensegmente bei Verschiebung in Richtung auf die Ausgangsöffnung des Kuppelmoduls zu zur Bildung des minimalen stirnseitigen Abstands zum Flugzeugrumpf mit Hilfe einer Sensoreinrichtung angesteuert wird. Das heißt, dass die jeweilige Antriebseinrichtung der einzelnen oder einer Mehrzahl an Bodensegmenten mit der Sensoreinrichtung signalübertragend in Verbindung steht, sodass auf diese Weise sichergestellt sein kann, dass ein voreingestellter Abstand zwischen der Stirnseite der einzelnen Bodensegmente und der Flugzeughaut des Flugzeugrumpfes durch eine Steuerung eingehalten werden kann. Hieraus wird deutlich, dass die Anzahl der Antriebseinrichtungen geringer sein kann als die Anzahl der Bodensegmente; gleiches gilt für die Anzahl der Sensoren an den Bodensegmenten.

Nach einem weiteren Merkmal der Erfindung zeigt das Bodenkopfteil stirnseitig einen Bodenbumper auf. Der Bodenbumper umfasst ein stirnseitig an dem Bodenkopfteil oder den einzelnen Bodensegmenten angeordnetes, durchgängiges Bumperblech, auf dessen Stirnseite das Bumperkissen angeordnet ist. Denkbar ist allerdings auch, für jedes einzelne Bodensegment einen Bumper bzw. ein Bumperelement vorzusehen. Durch den Bodenbumper wird dafür gesorgt, dass bei ruckhaften Bewegungen des Flugzeugs und/oder der Fluggastbrücke jeweils relativ zueinander und damit einhergehend der Gefahr, dass die Stirnseite des Kuppelmoduls trotz des Abstandes in Kontakt mit der Außenhaut des Flugzeugs gelangt, diese durch den Bodenbumper geschützt ist.

Durch die Sensoreinrichtung wird vorteilhaft die Kontur des Rumpfes zumindest im Bereich der Stirnseite des Bodens des Kuppelmoduls vorzugsweise aber über den gesamten Eingangsbereich, also den Bereich der Zugangstür für das Flugzeug erfasst. Hierzu weist die Sensoreinrichtung mehrere Sensoren auf, wobei vorteilhaft zumindest ein Teil der Bodensegmente jeweils über einen Sensor der Sensoreinrichtung verfügt. Auch wenn lediglich ein Teil der Bodensegmente über einen Sensor und/oder eine Antriebseinrichtung verfügt, erfolgt durch den Bumper an der freien Stirnseite der Bodensegmente eine Vergleichmäßigung des Auszugs der Bodensegmente im Sinne einer vergleichsmäßigten stirnseitigen Außenkontur der Bodensegmente, das heißt, es kann hierdurch ein konstanter Abstand der Bodensegmente zum Rumpf des Flugzeugs eingehalten werden.

Ein jeder Sensor umfasst eine Lichtsendeeinheit, die mit einem Detektor in Verbindung steht, wobei der Detektor vorteilhaft Bestandteil der Lichtsendeeinheit sein kann, allerdings auch gesondert dazu im Bodenbereich des Kuppelmoduls angeordnet sein kann. Alternativ können auch Ultraschallsensoren eingesetzt werden. Eine solche Sensoreinrichtung ist nicht nur in der Lage, die Kontur des Rumpfes zumindest im Bereich des Bodens des Kuppelmoduls zu erfassen, sondern kann auch in der Lage sein, die Kontur des Rumpfes im Bereich der Eingangstür, also den Bereich der vom Kuppelmodul erfasst wird, abzutasten. Dies vor folgendem Hintergrund. Das Kuppelmodul weist ein durch eine Schwenkvorrichtung ausschwenkbares Vordach aus, das vom Grundsatz her unabhängig von der Bewegung des Bodenkopfteils auf den Flugzeugrumpf zu verschwenkbar ist. Ist die Sensoreinrichtung nicht nur in der Lage, die Kontur des Flugzeugrumpfes im Bereich des Bodens des Kuppelmoduls zu erfassen, sondern den gesamten Eingangsbereich, wie zuvor beschrieben, dann besteht die Möglichkeit, durch die Sensoreinrichtung auch die Bewegung der Schwenkvorrichtung für das ausschwenkbare Vordach zu steuern, das heißt, die Schwenkbewegung des Vordachs des Kuppelmoduls zu steuern. Insofern steht auch die Schwenkvorrichtung vorteilhaft signalübertragend mit der Steuerung der Sensoreinrichtung in Verbindung.

Nach einem weiteren Merkmal der Erfindung steht das Bodenkopfteil mit dem Vordach verschieblich in Verbindung. Das heißt, dass wenn das Bodenkopfteil in Richtung der offenen Stirnseite des Kuppelmoduls zu verschoben wird, dass dann auch das Vordach des Kuppelmoduls im Bodenbereich mit ausgezogen wird. Dies vor dem Hintergrund, dass auch im Übergangsbereich der Seitenwände des Kuppelmoduls zum Flugzeugrumpf eine seitliche Abschirmung gegen Witterungseinflüsse gegeben ist.

Anhand der Zeichnungen wird die Erfindung nachstehend beispielhaft näher erläutert.
- Figur 1: zeigt das Kuppelmodul in perspektivischer Darstellung in einer Ansicht auf die Ausgangsöffnung zum Flugzeug zu;
- Figur 2: zeigt das Kuppelmodul im Schnitt in ausgezogener Position des Bodenkopfteils bei Anlage an dem Flugzeugrumpf in einer Ansicht von oben;
- Figur 3: zeigt eine Darstellung des Kuppelmoduls gemäß Figur 2, wobei jedoch das Bodenkopfteil eingezogen ist.

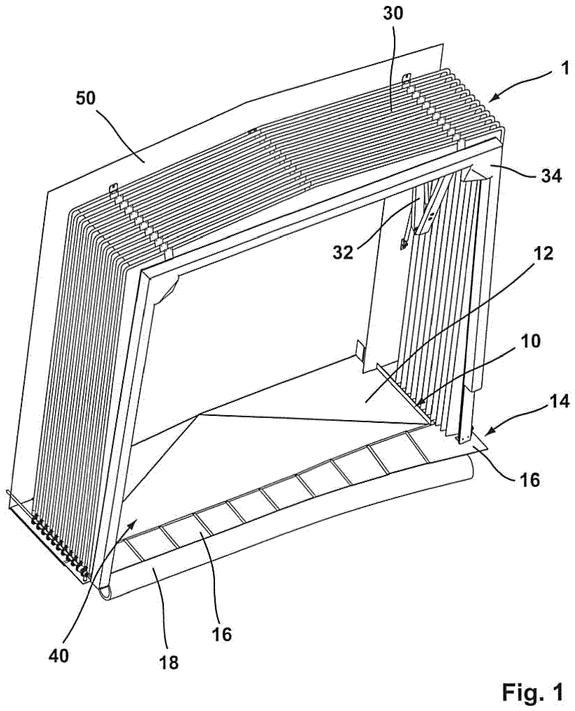

Das gemäß Figur 1 mit 1 bezeichnete Kuppelmodul umfasst den mit 10 bezeichneten Boden und das ausschwenkbare Vordach 30. Der Boden 10 des Kuppelmoduls 1 umfasst den feststehenden Bodenabschnitt 12 sowie das Bodenkopfteil 14, das in Richtung auf die Ausgangsöffnung 40 des Kuppelmoduls horizontal ausfahrbar ausgestaltet ist. Das Bodenkopfteil 14 umfasst über seine gesamte Breite eine Mehrzahl von nebeneinander angeordneten Bodensegmenten 16, die relativ zueinander verschieblich durch den feststehenden Bodenabschnitt 12 des Bodens 10 des Kuppelmoduls 1 aufgenommen sind. Frontseitig weist das Bodenkopfteil 14 den Bodenbumper 18 auf, der die einzelnen Bodensegmente 16 des Bodenkopfteils 14 durch das Bumperblech miteinander verbindet. Auf dem Bumperblech befindet sich das Bumperkissen. Denkbar ist allerdings auch, dass ein jedes Bodensegment über einen eigenen Bodenbumper verfügt. Die einzelnen Bodensegmente 16 können miteinander durch eine Nut- und Federverbindung verschieblich verbunden sein, um die Stabilität des Bodenkopfteils insgesamt zu erhöhen.

Das Vordach 30, als Teil des Kuppelmoduls 1, das an der Stirnwand 50 einer Fluggasttreppe oder Fluggastbrücke (nicht dargestellt) angeordnet ist, ist durch eine, vorzugsweise durch zwei Schwenkvorrichtungen 32 in Richtung auf den Flugzeugrumpf zu ausschwenkbar, wobei das Vordach 30 den insgesamt mit 34 bezeichneten Vordachbumper aufweist; das Vordach und ebenso auch der Vordachbumper sind hierbei in der Ansicht in etwa U-förmig ausgebildet. Das heißt, jeweils eine Schwenkvorrichtung 32 kann zu beiden Seiten des Vordachs 30 im Dachbereich des Vordachs angeordnet sein.

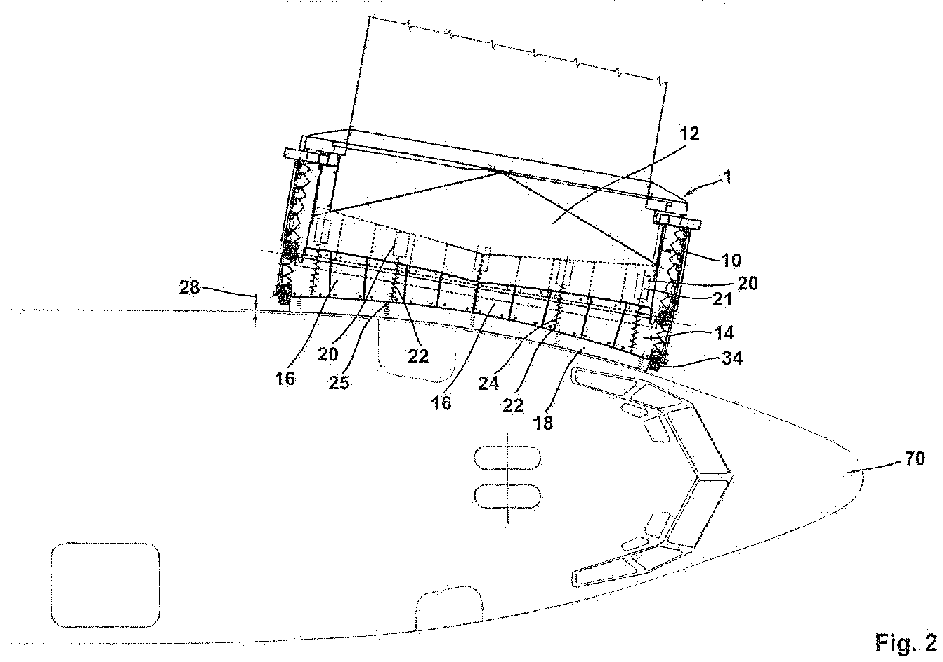

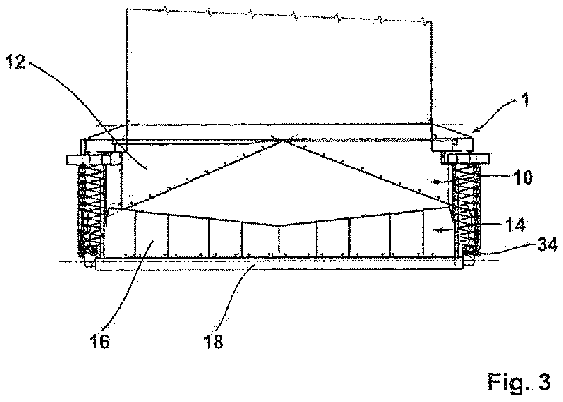

Die einzelnen Bodensegmente 16 sind, wie sich das auch in Anschauung von Figur 2 und Figur 3 ergibt, unterhalb des feststehenden Bodenabschnitts 12 am Bodenabschnitt 12 verschieblich gelagert. Zum Ausfahren der einzelnen Bodensegmente 16 ist jeweils eine Antriebseinrichtung 20 vorgesehen, wobei die Antriebseinrichtung 20 einen Seilzug 21 mit einem Seil 22 umfasst. Im eingefahrenen Zustand (Figur 3) der Bodensegmente stehen die Bodensegmente unter der Kraft der Feder 24. Durch die Feder, die sich einerseits im vorderen Ende des Bodensegmentes oder dem Bumperblech abstützt und andererseits beispielsweise am Gehäuse des Seilzuges 21, wird bei Lockerung des Seiles 22 das entsprechende Bodensegment 16 in Richtung auf das Flugzeug 70 zu verschoben. Eine solche Antriebseinrichtung 20 kann in Bezug auf jedes einzelne Bodensegment 16 vorgesehen sein; es ist allerdings auch denkbar, mehrere Bodensegmente miteinander zu koppeln und durch eine oder mehrere derartiger Antriebseinrichtungen zu verschieben. In diesem Fall findet eine Vergleichmäßigung des Auszugs der Bodensegmente durch den die Bodensegmente verbindenden Bodenbumper statt. Der Vorteil der Verwendung eines Seilzuges in Verbindung mit einer Feder zum Ausfahren bzw. Einfahren der Bodensegmente besteht darin, dass eine solche Antriebsvorrichtung, insbesondere im Gegensatz zu einem Kolbenzylinderantrieb, nachgiebig ist. Dies vor dem Hintergrund, dass das Flugzeug 70 sich bei Be- oder Entladung zum Teil ruckhaft nach unten oder nach oben bewegt. Das heißt, es kann vorkommen, dass der Flugzeugrumpf trotz des Abstandes 28 zwischen dem Flugzeugrumpf und dem Bodenbumper in Kontakt mit dem Bodenbumper gerät. Um nun eine Beschädigung der Außenhaut nach Möglichkeit weitgehend auszuschließen, ist durch die Wahl der Antriebseinrichtung 20 gewährleistet, dass die Bodensegmente und entsprechend auch der Bodenbumper zurückweichen können, also einfahren können. Dies wäre beispielsweise mit einem Kolbenzylinderantrieb als Antriebsvorrichtung nicht oder nur schwerlich möglich.

Darüber hinaus sind insbesondere im vorderen Bereich der Bodensegmente 16 Sensoren 25 vorgesehen, wobei mit Hilfe der Sensoren, die mit einer entsprechenden Steuereinheit in Verbindung stehen, sichergestellt werden kann, dass die Bodensegmente 16 bzw. das Bodenkopfteil 14 in seiner Gesamtheit einen bestimmten Abstand zu dem Flugzeugrumpf einhält. Der Abstand 28 soll nach Möglichkeit über die gesamte Breite des Bodens 10 konstant gehalten werden. Dies geschieht dadurch, dass das Bodenkopfteil durch die Vielzahl der einzelnen Bodensegmente verhältnismäßig kleinteilig ausgebildet ist.

### Bezugszeichenliste:

- 1: Kuppelmodul
- 10: Boden
- 12: feststehender Bodenabschnitt
- 14: Bodenkopfteil
- 16: Bodensegment
- 18: Bodenbumper
- 20: Antriebseinrichtung
- 21: Seilzug
- 22: Seil
- 24: Feder
- 25: Sensoren
- 28: stirnseitiger Abstand
- 30: Vordach
- 32: Schwenkvorrichtung
- 34: Vordachbumper
- 40: Ausgangsöffnung des Kuppelmoduls
- 50: Stirnwand (Fluggastbrücke)
- 70: Flugzeug

## Patentansprüche

1. Kuppelmodul (1) als Schnittstelle zwischen einer Fluggastbrücke oder Fluggasttreppe und dem Rumpf eines Flugzeugs (70), wobei das Kuppelmodul (1) einen Boden (10) und eine Ausgangsöffnung (40) aufweist, wobei der Boden (10) ein Bodenkopfteil (14) umfasst, wobei das Bodenkopfteil (14) durch mindestens eine Sensoreinrichtung gesteuert unter Bildung eines stirnseitigen Abstands (28) des Bodenkopfteils (14) zum Flugzeugrumpf horizontal in Richtung der Ausgangsöffnung (40) des Kuppelmoduls (1) verschieblich ist
**dadurch gekennzeichnet,**
**dass** der Boden (10) einen feststehenden Bodenabschnitt (12) aufweist, wobei an dem feststehenden Bodenabschnitt (12) das mindestens eine Bodenkopfteil (14) verschieblich angeordnet ist.

2. Kuppelmodul (1) nach Anspruch 1 ,
**dadurch gekennzeichnet,**
**dass** das Bodenkopfteil (14) mehrere Bodensegmente (16) umfasst, die relativ zueinander verschieblich sind.

3. Kuppelmodul (1) nach Anspruch 2,
**dadurch gekennzeichnet,**
**dass** zumindest ein Teil der Bodensegmente (16) bei Verschiebung in Richtung auf die Ausgangsöffnung (40) des Kuppelmoduls (1) zu, zur Bildung eines minimalen stirnseitigen Abstands (28) zum Flugzeugrumpf durch die Sensoreinrichtung angesteuert wird.

4. Kuppelmodul (1) nach Anspruch 2 oder 3,
**dadurch gekennzeichnet,**
**dass** zumindest ein Teil der Bodensegmente (16) über eine Antriebseinrichtung (20) verfügt.

5. Kuppelmodul (1) nach einem der voranstehenden Ansprüche,
**dadurch gekennzeichnet,**
**dass** das Bodenkopfteil (14) stirnseitig einen Bodenbumper (18) aufweist.

6. Kuppelmodul (1) nach einem der voranstehenden Ansprüche,
**dadurch gekennzeichnet,**
**dass** durch die Sensoreinrichtung die Kontur des Rumpfes des Flugzeugs (70) zumindest im Bereich des Bodens (10) des Kuppelmoduls (1) vorzugsweise aber über den gesamten Eingangsbereich, des Flugzeugs, erfasst wird.

7. Kuppelmodul (1) nach Anspruch 6,
**dadurch gekennzeichnet,**
**dass** der stimseitige Abstand (28) durch die Sensoreinrichtung definiert einstellbar ist.

8. Kuppelmodul (1) nach einem der voranstehenden Ansprüche
**dadurch gekennzeichnet,**
**dass** die Sensoreinrichtung mehrere Sensoren (25) umfasst.

9. Kuppelmodul (1) nach einem der Ansprüche 2 bis 8,
**dadurch gekennzeichnet,**
**dass** zumindest ein Teil der Bodensegmente (16) einen Sensor (25) der Sensoreinrichtung aufweist.

10. Kuppelmodul (1) nach einem der voranstehenden Ansprüche,
**dadurch gekennzeichnet,**
**dass** das Kuppelmodul (1) ein durch mindestens eine Schwenkvorrichtung (32) ausschwenkbares Vordach (30) aufweist, das unabhängig von der Bewegung des Bodenkopfteils (14) auf den Flugzeugrumpf zu verschwenkbar ist.

11. Kuppelmodul (1) nach Anspruch 10,
**dadurch gekennzeichnet,**
**dass** die Schwenkvorrichtung (32) signalübertragend mit der Sensoreinrichtung in Verbindung steht.

12. Kuppelmodul (1) nach einem der Ansprüche 4 bis 11,
**dadurch gekennzeichnet,**
**dass** die Antriebseinrichtung (20) signalübertragend mit der Sensoreinrichtung in Verbindung steht.

13. Kuppelmodul (1) nach Anspruch 12,
**dadurch gekennzeichnet,**
**dass** die Sensoreinrichtung über eine Steuerung verfügt.

## Claims

1. A coupling module (1) as an interface between a passenger boarding bridge or passenger boarding stairs and the fuselage of an aircraft (70), the coupling module (1) having a floor (10) and an exit opening (40), the floor (10) comprising a floor head part (14), wherein the floor head part (14) is horizontally slidable, under the control of at least one sensor arrangement, in the direction of the exit opening (40) of the coupling module (1), while forming a front side distance (28) between the floor head part (14) and the aircraft fuselage,
**characterized in that**
the floor (10) comprises a stationary floor section (12), the at least one floor head part (14) being slidably disposed on the stationary floor section (12).

2. The coupling module (1) according to claim 1,
**characterized in that**
the floor head part (14) comprises several floor segments (16), which are slidable relative to each other.

3. The coupling module (1) according to claim 2,
**characterized in that**
at least a part of the floor segments (16) is controlled by the sensor arrangement during a displacement in the direction of the exit opening (40) of the coupling module (1) for forming a minimal front side distance (28) relative to the aircraft fuselage.

4. The coupling module (1) according to claim 2 or 3,
**characterized in that**
at least a part of the floor segments (16) is equipped with a drive device (20).

5. The coupling module (1) according to one of the afore-mentioned claims,
**characterized in that**
the floor head part (14) features a floor bumper (18) on its front side.

6. The coupling module (1) according to one of the afore-mentioned claims,
**characterized in that**
the sensor arrangement detects the contour of the fuselage of the aircraft (70), at least in the area of the floor (10) of the coupling module (1), but preferably the entire entrance area of the aircraft.

7. The coupling module (1) according to claim 6,
**characterized in that**
the front side distance (28) is adjustable in a defined manner by the sensor arrangement.

8. The coupling module (1) according to one of the afore-mentioned claims,
**characterized in that**
the sensor arrangement comprises several sensors (25).

9. The coupling module (1) according to one of the claims 2 to 8,
**characterized in that**
at least a part of the floor segments (16) features a sensor (25) of the sensor arrangement.

10. The coupling module (1) according to one of the afore-mentioned claims,
**characterized in that**
the coupling module (1) features a canopy (30) that can be swung out by at least one pivoting device (32) and that can be swung toward the aircraft fuselage independently from the movement of the floor head part (14).

11. The coupling module (1) according to claim 10,
**characterized in that**
the pivoting device (32) is advantageously connected, in a signal-transmitting manner, with the sensor arrangement.

12. The coupling module (1) according to one of the claims 4 to 11,
**characterized in that**
the drive device (20) is connected, in a signal-transmitting manner, with the sensor arrangement.

13. The coupling module (1) according to claim 12,
**characterized in that**
the sensor arrangement is provided with a control device.

## Revendications

1. Module de couplage (1) comme interface entre une passerelle aéroportuaire ou un escalier d'embarquement et le fuselage d'un avion (70), où le module de couplage (1) comprend un sol (10) et une ouverture de sortie (40), où le sol (10) comprend une pièce de tête de sol (14), où la pièce de tête de sol (14) est adaptée pour coulisser horizontalement sous contrôle d'au moins un dispositif capteur en direction de l'ouverture de sortie (40) du module de couplage (1) en formant un espace (28) frontal entre la pièce de tête de sol (14) et le fuselage de l'avion,
**caractérisé en ce que**
le sol (10) comprend une section de sol (12) fixe, où l'au moins une pièce de tête de sol (14) est disposée de manière coulissante au niveau de la section de sol (12) fixe.

2. Module de couplage (1) selon la revendication 1,
**caractérisé en ce que**
la pièce de tête de sol (14) comprend plusieurs segments de sol (16) qui sont aptes à coulisser les uns par rapport aux autres.

3. Module de couplage (1) selon la revendication 2,
**caractérisé en ce que**
lors du coulissement en direction de l'ouverture de sortie (40) du module de couplage (1), au moins une partie des segments de sol (16) est commandée par le dispositif capteur de manière à former un espace frontal (28) minimal par rapport au fuselage de l'avion.

4. Module de couplage (1) selon la revendication 2 ou 3,
**caractérisé en ce qu'**
au moins une partie des segments de sol (16) dispose d'un dispositif d'entraînement (20).

5. Module de couplage (1) selon l'une des revendications précédentes,
**caractérisé en ce que**
la pièce de tête de sol (14) comporte un tampon de sol (18) sur son côté frontal.

6. Module de couplage (1) selon l'une des revendications précédentes,
**caractérisé en ce que**
le contour du fuselage de l'avion (70) est capturé par le dispositif capteur, du moins dans la région du sol (10) du module de couplage (1) mais de préférence dans toute la région de l'entrée de l'avion.

7. Module de couplage (1) selon la revendication 6,
**caractérisé en ce que**
la distance frontale (28) est réglable de manière définie par le dispositif capteur.

8. Module de couplage (1) selon l'une des revendications précédentes,
**caractérisé en ce que**
le dispositif capteur comprend plusieurs capteurs (25).

9. Module de couplage (1) selon l'une des revendications 2 à 8,
**caractérisé en ce que**
au moins une partie des segments de sol (16) comporte un capteur (25).

10. Module de couplage (1) selon l'une des revendications précédentes,
**caractérisé en ce que**
le module de couplage (1) comporte un auvent (30) pouvant être pivoté vers l'extérieur au moyen d'au moins un dispositif de pivotement (32) et pouvant être pivoté vers le fuselage de l'avion indépendamment du mouvement de la pièce de tête de sol (14).

11. Module de couplage (1) selon la revendication 10,
**caractérisé en ce que**
le dispositif de pivotement (32) est connecté au dispositif capteur d'une manière permettant la transmission de signaux.

12. Module de couplage (1) selon l'une des revendications 4 à 11,
**caractérisé en ce que**
le dispositif d'entraînement (20) est connecté au dispositif capteur d'une manière permettant la transmission de signaux.

13. Module de couplage (1) selon la revendication 12,
**caractérisé en ce que**
le dispositif capteur dispose d'une commande.
